# EUROPEAN PATENT SPECIFICATION

(11) **EP 1 878 564 B1**
(45) Date of publication and mention of the grant of the patent: **15.05.2013**
(21) Application number: 06715347.8
(22) Date of filing: 07.03.2006
(51) Int. Cl.: B29D 30/30, B60C 15/02, B60C 15/06, B60C 17/00

(54) **METHOD OF MANUFACTURING RUN-FLAT TIRE**
VERFAHREN ZUR HERSTELLUNG EINES RUN-FLAT-REIFENS
PROCEDE DE FABRICATION DE PNEU POUR ROULAGE A PLAT

(30) Priority: 09.03.2005 JP 2005065407; 09.03.2005 JP 2005065430
(43) Date of publication of application: 16.01.2008
(73) Proprietor: Toyo Tire & Rubber Co. Ltd., Osaka-shi, Osaka 550-8661 (JP)
(72) Inventor: SEGAWA, Masahiro, c/o TOYO TIRE & RUBBER CO., LTD., Nishi-ku, Osaka-shi, Osaka 550-8661 (JP); HANA, Kazutaka, c/o TOYO TIRE & RUBBER CO., LTD., Nishi-ku, Osaka-shi, Osaka 550-8661 (JP)
(74) Representative: Sajda, Wolf E.
(86) International application number: PCT/JP2006/304377
(87) International publication number: WO 2006/095735

(56) References cited:
- WO-A-02/02354
- WO-A1-2006/028083
- DE-A1- 2 715 105
- JP-A- 50 082 701
- JP-A- 2003 191 722
- JP-A- 2003 514 706
- JP-A- 2006 044 611
- US-A- 4 061 172
- US-A- 4 365 659
- US-A1- 2004 154 720

## Description

### TECHNICAL FIELD

The present invention relates to a self supporting type run-flat tire in which a second bead is arranged in an annular projecting portion projecting to an outer side in a tire width direction of a bead portion, and a method of manufacturing the same.

### BACKGROUND ART

The run-flat tire means a tire which can safely travel at a certain degree of distance even in the case that an air pressure in an inner portion of the tire is lowered due to an obstacle such as a puncture or the like. One of tire structures for enabling the run-flat travel mentioned above, there has been known a run-flat tire provided with a reinforcing rubber layer in a side wall portion. In accordance with the run-flat tire mentioned above, when the air pressure in the inner portion of the tire is lowered, the reinforcing rubber layer supports the tire so as to prevent the tire from being flattened completely, whereby the run-flat travel can be executed.

However, since a pressure of a bead portion applied to a rim is weakened in a state in which the air pressure in the inner portion of the tire is lowered, a fitting force to the rim is lowered, and there is a problem that the bead portion tends to be separated from the rim. Accordingly, there has been proposed a so-called double bead type run-flat tire in which the bead is arranged in the annular projecting portion projecting to an outer side in a tire width direction of the bead portion in addition to the bead arranged in an outer circumferential side of a bead sheet portion of the rim (refer to the following Patent Documents 1 and 2). In accordance with the structure mentioned above, the annular projecting portion having a high elasticity by the bead holds the rim flange at a time of the run-flat traveling so as to prevent the rim separation.

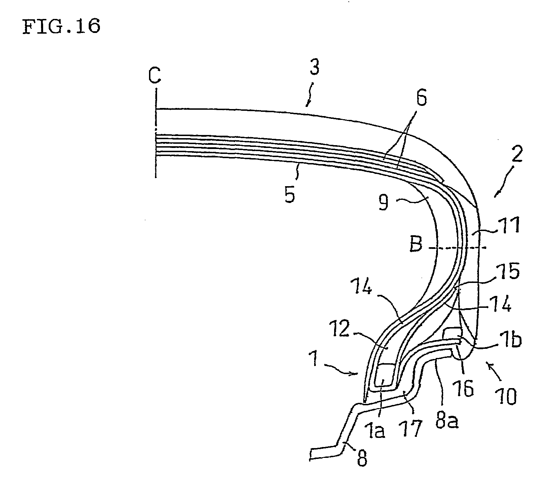

Fig. 16 is a tire meridian cross sectional view showing a conventional double bead type run-flat tire. A bead portion 1 is provided with a bead 1a and a bead filler 12, and a carcass ply 14 is wound up from an inner side to an outer side in such a manner as to sandwich them. In a side wall portion 2, a side wall rubber 11 is arranged in an outer side, and a reinforcing rubber layer 9 having approximately a crescent-shaped cross section is arranged in an inner side.
An annular projecting portion 10 is formed so as to be projecting to an outer side in a tire width direction of the bead portion 1, and has an annular second bead 1b. Further, the reinforcing layer 16 is arranged along an inner circumferential surface of the annular projecting portion 10, and a rim strip rubber 17 is arranged in a portion which directly comes into contact with a rim 8.

In the run-flat tire mentioned above, if the side reinforcement portion is deflected and a tensile force is generated in the carcass at a time of the run-flat traveling, a bead toe tends to be lifted up. Accordingly, there is a problem that the bead tends to be separated from a rim. If it is intended to increase a tightening force of the bead or reduce a deflecting amount of the tire in order to avoid this, an excessive reinforcement is necessary, and there is a problem that a difficulty of a rim assembly and an increase of a weight are caused.

Further, the following Patent Document 3 describes a self supporting type run-flat tire having no second bead 1b, in which the reinforcing layer 16 is formed by a spiral winding structure of one or a plurality of cords. However, since there is no description concerning a manufacturing method thereof, it is understood that the tire is manufactured in accordance with a method of attaching a sheet in the same manner as the general reinforcing layer.

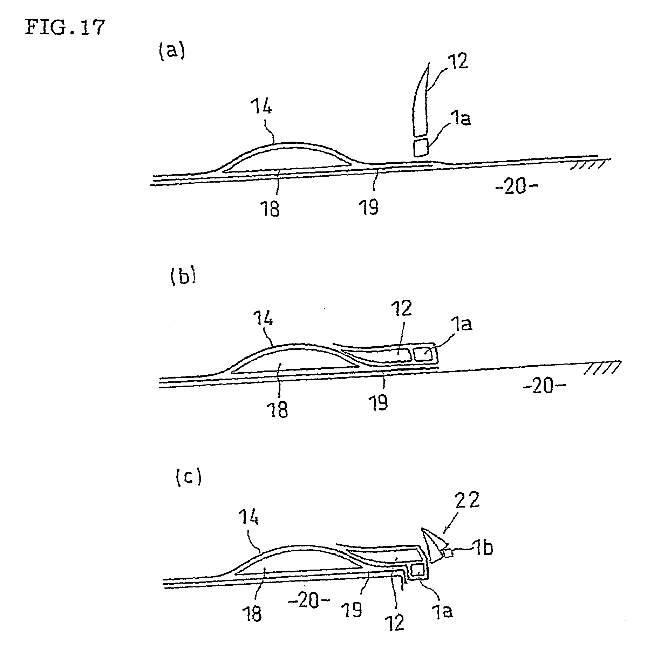

On the other hand, the run-flat tire as shown in Fig. 16 is manufactured via the following manufacturing steps. In other words, sequentially shown in Figs. 17(a) to 17(c), an outer circumferential surface of a molding drum is first set to a molded surface 20, and an inner liner rubber 19 forming the inner liner layer 5, and a reinforcement rubber member 18 forming the reinforcing rubber layer 9 are respectively arranged in an outer circumferential side thereof. Further, the carcass ply 14 is arranged in an outer circumferential side thereof, and the bead 1a and the bead filler 12 are outside inserted to a predetermined position.
Subsequently, the carcass ply 14 is wound up, and the bead 1a and the bead filler 12 are arranged so as to be sandwiched. Next, the bead 1a, the bead filler 12 and the carcass ply 14 are approximated vertically by means for slightly expanding the formed surface 20 of the molding drum or the like. The reinforcing layer, the rim strip rubber, the side wall rubber and the like are arranged in addition to a rubber member 22 constructing the annular projecting portion 10 and the second bead 1b, in an outer circumferential side of the carcass ply 14. The second bead 1b uses a structure which is separately manufactured as an assembly of the bead wire by spirally winding the bead wire. Thereafter, the molded product is deformed along a tire shape and the step goes to a vulcanizing step after forming the tread portion 3.

However, in the manufacturing method mentioned above, a mechanism of attaching so as to prevent an eccentricity with respect to a tire shaft is necessary at a time of arranging the annular second bead 1b. Further, there is a problem that a winding support mechanism and an assembly bundling device at a time of previously manufacturing the assembly of the bead wire becomes on a large scale. Further, since the second bead 1b is arranged before expanding and deforming the molded product in a tire shape, there is a problem that the eccentricity of the second bead 1b, the deformation of the cross sectional shape and the like tend to be generated at a time of expanding and deforming the molded product.

Further, in the case of manufacturing by attaching the reinforcing layer formed as the spiral wound structure of the cord to the molded product such as the Patent Document 3, there is generated a problem in a uniformity caused by the eccentricity, an equipment and a process, in the same manner as the case of attaching the second bead 1b as mentioned above.

On the other hand, in the normal pneumatic tire which does not correspond to the run-flat tire, there has been known a method of manufacturing a tire in which a bead (corresponding to a first bead) is formed by spirally winding a bead wire on a molded product (for example, refer to Patent Documents 4 and 5). However, these manufacturing methods employ a construction method of using an annular core having the same outer shape as an inner surface shape of the tire and sequentially arranging (attaching) the constituting members thereto, however, in the case of the run-flat tire, such construction method is not employed. Accordingly, in the method of manufacturing the run-flat tire, there has not been known the method of forming the bead by spirally winding the bead wire on the molded product.
- Patent Document 1:: Japanese Unexamined Patent Application Publication JP-A-51-116 507
- Patent Document 2:: Japanese Unexamined Patent Application Publication JP-A-53-138 106
- Patent Document 3:: Japanese Unexamined Patent Application Publication JP-A-2001-080 318
- Patent Document 4:: Japanese Unexamined Patent Application Publication JP-A-2004-501 815
- Patent Document 5:: Japanese Unexamined Patent Application Publication JP-A-2003-514 706
Document US 4 061 172 A discloses a pneumatic tire and wheel assembly comprising a tire including a tread and a pair of sidewalls extending radially inwardly therefrom on each side thereof and terminating in bead areas, and a wheel rim. The pneumatic tire comprises a ring-formed projection axially outside of the wheel rim and adjacent the rim flange and including a first portion projecting radially inwardly of the rim flange. Hence, when the tire has an inner pressure of zero and is under no load, the half difference between the minimum diameter of the ring-formed projection at the first portion and the outer diameter of the rim flange ranges from 2 mm to 7 mm, the ring-formed projection further includes a second rigid portion radially beyond the rim wherein specific rubber materials are used for the rubber compound to achieve specific physical properties in these areas.
Document DE 27 15 105 A describes a pneumatic tire and wheel rim structure. The wheel rim structure has a pair of ring-shaped supporting portions. Document US 2004/0154720 A1 discloses a tire comprising a carcass-type reinforcement structure extending circumferentially from a bead to the sidewall and a crown reinforcement, each of the beads further comprising a main anchoring zone for supporting the reinforcement structure, the tire comprising a rim protector provided by a rubber projection extending axially outwardly relative to a sidewall and comprising at least one secondary anchoring zone, comprising a plurality of circumferential cord windings.
Document US 4 365 659 A discloses a tire according to the preamble of claim 8; in particular they disclose a pneumatic safety tire, which is provided with a ring-shaped projection of high rigidity along its circumferential direction, outside of at least one bead of the pneumatic tire, wherein the projection has a smaller diameter than the diameter of the rim flange to which the tire is fitted. The ring-shaped projection is designed so that it projects to the outside along the rim flange.
Document WO 02/02354 A1 discloses a run-flat tire including a sidewall with a radial portion and a cantilever portion. The cantilever portion is fabricated by extending a sidewall insert in the axially inward direction or by extending a bead filler in the axially outward direction. Also JP 50 082 701 A, JP 2003 191722 A and JP 2003 514706 A relate to pneumatic tires.

### DISCLOSURE OF THE INVENTION

### PROBLEM TO BE SOLVED BY THE INVENTION

Accordingly, the object of the present invention is to provide a run-flat tire and a method of manufacturing a run-flat tire which has a good uniformity by simple equipment.

### MEANS FOR SOLVING THE PROBLEM

The object mentioned above is achieved according the present invention by the method of manufacturing a run-flat tire as defined in claim 1, by the method of manufacturing a run-flat tire defined in claim 4 and by a run-flat tire as defined in claim 8. Particular embodiments of the invention are the subject of the dependent claims.
In other words, a method of manufacturing a run-flat tire of the present invention comprises: a step of respectively arranging an inner liner rubber, a reinforcement rubber member reinforcing side wall portions at both sides and a carcass ply at predetermined positions of an outer circumference of a molding drum; a step of arranging a pair of first beads and bead fillers and deforming the inner side inside of the first beads into a toroid shape; a step of winding up an end portion of the carcass ply so as to attach it before or after the deformation; a step of attaching a rubber member constructing an annular projecting portion to a side portion of the bead filler of the toroid-shaped molded product; and a step of spirally attaching a cord to the rubber member so as to form a second bead while rotating the molded product attached around an axis.

In accordance with the method of manufacturing the run-flat tire of the present invention, since the cord is spirally attached to the rubber member while rotating the toroid-shaped molded product around the axis, the eccentricity preventing mechanism such as the conventional apparatus for arranging the annular second bead is not necessary.
Further, in comparison with the conventional method, the eccentricity is hard to be generated at a time of attaching, and the eccentricity, the deformation of the cross sectional shape and the like at a time of expanding and deforming the molded product are hard to be generated, whereby the uniformity is improved. Further, since it is not necessary to previously form the assembly of the bead wire, and it is possible to manufacture by adding only a cord attaching apparatus, it is possible to manufacture the tire by the simple equipment and step.

In the above, it is preferred that the toroid-shaped molded product is formed by a step of arranging an inner liner rubber and a reinforcement rubber member reinforcing side wall portions in both sides at predetermined positions of an outer circumference of a molding drum, and arranging a carcass ply in which a cord is arranged in a width direction further in an outer side from a portion near an outer end in a drum width direction of each of the reinforcement rubber members, a step of arranging a pair of first beads and bead fillers somewhat outside of an inner end in the drum width direction of the carcass ply, a step of deforming an inner side inside of the first bead of the obtained molded product in a toroid shape, and a step of winding up an outer end of each of the carcass plies around an outer circumferential side of the molded product after being deformed so as to attach thereto.

In accordance with this manufacturing method, since the inner side from the first bead is deformed in the toroid shape, after arranging the carcass ply in the outer side of the reinforcement rubber member and thereafter arranging a pair of first beads and the bead filler somewhat outside of the inner end thereof, it is possible to easily arrange the inside wind-up portion of the carcass ply in the inner side of the bead. Further, since the outer end of the carcass ply is wound up around and attached to the outer circumferential side of the molded product obtained as mentioned above, it is easy to attach the carcass ply by pressure to the reinforcement rubber member after shaping. As a result, it is possible to manufacture the run-flat tire having an excellent durability against bead unseating without generating an increase of the weight, with a good productivity.
Further, there is formed the tire in which one end of the carcass ply is wound up to the inner side from the outer side of the first bead. Accordingly, if the side reinforcement portion is deflected and the tensile force is generated in the carcass at a time of the run-flat traveling, a moment is generated around the bead and the bead toeis pressed against the bead sheet of the rim. Therefore, the bead unseating is hard to be generated.

Also, it is preferred that the cord is constituted by a cord coated by an unvulcanized rubber, and the method repeatedly executes a step of spirally attaching the cord to the same surface and thereafter subsequently attaching the cord to a top surface thereof. In the case of using the cord coated by the unvulcanized rubber, it is easy to adhere between the cords, and it is possible to form the second bead constituted by a plurality of layers by repeating the steps mentioned above.

On the other hand, a method of manufacturing a run-flat tire of another aspect of the present invention comprises: a step of respectively arranging an inner liner rubber, a reinforcement rubber member reinforcing side wall portions at both sides and a carcass ply at predetermined positions of an outer circumference of a molding drum; a step of arranging a pair of first beads and bead fillers and deforming the inner side inside of the first beads into a toroid shape; a step of winding up an end portion of the carcass ply so as to attach it before or after the deformation; a step of attaching a rubber member constructing an annular projecting portion) to a side portion of the bead filler of the toroid-shaped molded product; and a step of spirally attaching a cord to a region opposing to a rim flange of the rubber member so as to form a reinforcing layer while rotating the molded product attached around an axis.

In accordance with the other method of manufacturing the run-flat tire of the present invention, since the cord is spirally attached to the region opposing to the rim flange of the rubber member while rotating the toroid-shaped molded product around the axis, the eccentricity preventing mechanism such as the conventional apparatus arranging the annular reinforcing layer sheet is not necessary. Further, in comparison with the conventional method, the eccentricity is hard to be generated at a time of attaching, the eccentricity, the deformation of the cross sectional shape and the like at a time of expanding and deforming the molded product are hard to be generated, and the uniformity becomes good. Further, since it is not necessary to manufacture the reinforcing layer sheet in which the cord is previously wound spirally, and it is possible to manufacture by adding only the cord attaching apparatus, it is possible to manufacture the tire by the simple equipment and steps.

In the above, it is preferred that the method includes a step of forming the reinforcing layer by spirally attaching the cord from a tire inner circumferential side to a tire outer circumferential side, and a step of forming a second bead by spirally attaching the cord continuing from the reinforcing layer to the rubber member while rotating the molded product around an axis in succession to the forming step.

In accordance with this manufacturing method, since the cord is spirally attached to the rubber member while rotating the toroid-shaped molded product around the axis, the eccentricity preventing mechanism such as the conventional apparatus arranging the annular second bead is not necessary. Further, in comparison with the conventional method, the eccentricity is hard to be generated at a time of attaching, the eccentricity, the deformation of the cross sectional shape and the like at a time of expanding and deforming the molded product are hard to be generated, and the uniformity becomes good. Further, since it is not necessary to previously manufacture the assembly of the bead wire, and it is possible to manufacture by utilizing the attaching apparatus of the cord of the reinforcing layer, it is possible to manufacture the tire by the simple equipment and steps.

Further, it is preferable that the cord is constituted by a cord coated by an unvulcanized rubber, and the step of forming the second bead repeatedly executes a step of attaching the cord spirally to the same surface and thereafter subsequently attaching the cord spirally to an upper surface thereof. In the case of using the cord coated by the unvulcanized rubber, it is easy to adhere between the cords, and it is possible to form the second bead constituted by a plurality of layers by repeating the steps mentioned above.

It is preferred that the toroid-shaped molded product is formed by a step of arranging an inner liner rubber and a reinforcement rubber member reinforcing side wall portions in both sides at predetermined positions of an outer circumference of a molding drum, and arranging a carcass ply in which a cord is arranged in a width direction further in an outer side from a portion near an outer end in a drum width direction of each of the reinforcement rubber members, a step of arranging a pair of first beads and bead fillers somewhat outside of an inner end in the drum width direction of the carcass ply, a step of deforming an inner side inside of the first bead of the obtained molded product in a toroid shape, and a step of winding up an outer end of each of the carcass plies around an outer circumferential side of the molded product after being deformed so as to attach there.

In accordance with this manufacturing method, since the inner side from the first bead is deformed in the toroid shape, after arranging the carcass ply in the outer side of the reinforcement rubber member and thereafter arranging a pair of first beads and the bead filler somewhat outside of the inner end thereof, it is possible to easily arrange the inside wind-up portion of the carcass ply in the inner side of the bead. Further, since the outer end of the carcass ply is wound up around and attached to the outer circumferential side of the molded product obtained as mentioned above, it is easy to crimp the carcass ply with respect to the reinforcement rubber member after shaping.
As a result, it is possible to manufacture the run-flat tire having an excellent durability against bead unseating without generating an increase of the weight, with a good productivity. Further, there is formed the tire in which one end of the carcass ply is wound up to the inner side from the outer side of the first bead. Accordingly, if the side reinforcement portion is deflected and the tensile force is generated in the carcass at a time of the run-flat traveling, a moment is generated around the bead and the bead toe is pressed against the bead sheet of the rim. Therefore, the bead unseating is hard to be generated.

On the other hand, a run-flat tire of the present invention comprises: a pair of bead portions having an annular first bead and a bead filler arranged in a tire outer circumferential side of the first bead; side wall portions respectively extending to an outer side in a tire diametrical direction from the bead portions; a tread portion provided between the side wall portions; a belt layer provided at the tire inner circumferential side of the tread portion; a carcass layer constituted by a carcass ply wound up by the first bead; a reinforcing rubber layer arranged in the side wall portion; and an annular projecting portion projecting to an outer side in a tire width direction from the bead portion, and having a second bead, wherein the run-flat tire is characterized in that a reinforcing layer in which a cord is spirally arranged is provided in a region opposite to a rim flange of the annular projecting portion, and the second bead is formed by a spirally wound cord continuing from the reinforcing layer.

In accordance with the run-flat tire of the present invention, since the cord forming the reinforcing layer and the second bead are continuing, and are spirally wound, it is possible to form the reinforcing layer and the second bead by utilizing the same cord attaching apparatus, and it is possible to manufacture the tire by the simple equipment and steps. Further, since the eccentricity of the reinforcing layer and the second bead is hard to be generated, it is possible to obtain the run-flat tire having the improved uniformity.

### BRIEF DESCRIPTION OF THE DRAWINGS

- Fig. 1: is a tire meridian cross sectional view showing an example of a run-flat tire obtained by a first aspect of the invention.
- Fig. 2: is a cross sectional view of a main portion schematically showing an example of a bead portion of the run-flat tire obtained by the first aspect of the invention.
- Fig. 3: is a process chart showing an example of a method of manufacturing the run-flat tire in accordance with the first aspect of the invention.
- Fig. 4: is a process chart showing an example of the method of manufacturing the run-flat tire in accordance with the first aspect of the invention.
- Fig. 5: is a process chart showing an example of the method of manufacturing the run-flat tire in accordance with the first aspect of the invention.
- Fig. 6: is a tire meridian cross sectional view showing another example of the run-flat tire obtained by the first aspect of the invention.
- Fig. 7: is a process chart showing another example of the manufacturing method in accordance with the first aspect of the invention.
- Fig. 8: is a view of a main portion showing another example of the run-flat tire obtained by the first aspect of the invention.
- Fig. 9: is a tire meridian cross sectional view showing an example of a run-flat tire obtained by a second aspect of the invention.
- Fig. 10: is a cross sectional view of a main portion schematically showing an example of a bead portion of the run-flat tire obtained by the second aspect of the invention.
- Fig. 11: is a process chart showing an example of a method of manufacturing the run-flat tire in accordance with the second aspect of the invention;
- Fig. 12: is a process chart showing an example of the method of manufacturing the run-flat tire in accordance with the second aspect of the invention.
- Fig. 13: is a process chart showing an example of the method of manufacturing the run-flat tire in accordance with the second aspect of the invention.
- Fig. 14: is a tire meridian cross sectional view showing another example of the run-flat tire obtained by the second aspect of the invention.
- Fig. 15: is a process chart showing another example of the manufacturing method in accordance with the second aspect of the invention.
- Fig. 16: is a tire meridian cross sectional view showing an example of a conventional run-flat tire.
- Fig. 17: is a process chart explaining a method of manufacturing the conventional run-flat tire.

### DESCRIPTION OF REFERENCE NUMERALS

| | |
|---|---|
| 1 | = bead portion |
| 1a | = first bead |
| 1b | = second bead |
| 9 | = reinforcing rubber layer |
| 10 | = annular projecting portion |
| 11 | = side wall rubber |
| 12 | = bead filler |
| 13 | = annular rubber body |
| 13a | = rubber member |
| 13b | = rubber member |
| 14 | = carcass ply |
| 14a | = one end (inner side) |
| 14b | = other end (outer side) |
| 16 | = reinforcing layer |
| 18 | = reinforcement rubber member reinforcing side wall portion |
| 19 | = inner liner rubber |
| 20 | = molding drum |
| C | = tire equator line |
| BW | = cord |
| SC | = cord |

### BEST MODE FOR CARRYING OUT THE INVENTION

### Embodiment of first aspect of the invention

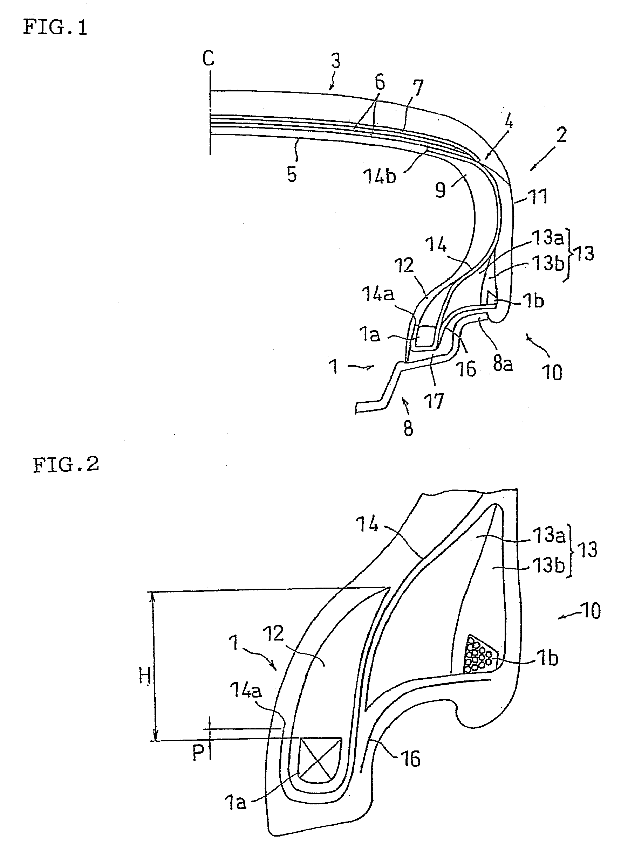

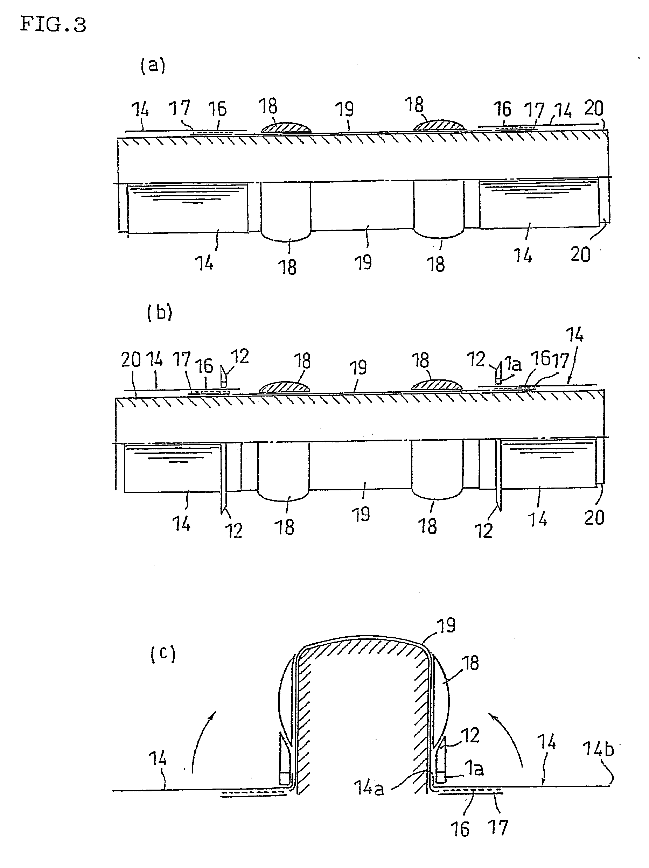

A description will be given below of an embodiment in accordance with the first aspect of the invention with reference to the accompanying drawings. Fig. 1 is a tire meridian cross sectional view showing an example of a run-flat tire obtained by a manufacturing method in accordance with the first aspect of the invention, and Fig. 2 is a cross sectional view of a main portion schematically showing a bead portion thereof. Further, Figs. 3 to 5 are process charts showing an example of the manufacturing method in accordance with the first aspect of the invention.

A method of manufacturing a run-flat tire in accordance with the first aspect of the invention includes a step of respectively arranging an inner liner rubber, a reinforcement rubber member reinforcing side wall portions in both sides and a carcass ply at predetermined positions of an outer circumference of a molding drum, a step of arranging a pair of first beads and bead fillers and deforming an inner side inside of first beads in a toroid shape, and a step of winding up an end portion of the carcass ply so as to attach before or after the deformation, thereby obtaining a toroid-shaped molded product.
Further, the first aspect of the invention includes a step of attaching a rubber member constructing an annular projecting portion to a side portion of the bead filler of the toroid-shaped molded product, and a step of spirally attaching the cord to the rubber member so as to form a second bead while rotating the molded product attached around an axis.

The present embodiment shows an example that the toroid-shaped molded product is formed by a step of arranging an inner liner rubber 19 and a reinforcement rubber member 18 reinforcing side wall portions in both sides at predetermined positions of an outer circumference of a molding drum 20, and arranging a carcass ply 14 in which a cord is arranged in a width direction further in an outer side from a portion near an outer end in a drum width direction of each of the reinforcement rubber members 18, a step of arranging a pair of first beads 1a and bead fillers 12 somewhat outside of an inner end in the drum width direction of the carcass ply 14, a step of deforming an inner side inside of the first bead 1a of the obtained molded product in a toroid shape, and a step of winding up an outer end 14b of each of the carcass plies 14 around an outer circumferential side of the molded product after being deformed so as to attach thereto, as shown in Figs. 3 to 5.

First, a description will be given of the run-flat tire obtained by this embodiment.

### Run-flat tire of present embodiment

The run-flat tire in accordance with the present embodiment is provided with a pair of bead portions 1, side wall portions 2 extending to an outer side in a tire diametrical direction respectively from the bead portions 1, and a tread portion 3 provided between the side wall portions 2, as shown in Figs. 1 and 2. A bead 1a (corresponding to the first bead mentioned above) in which an assembly of the bead wires is formed in an annular shape in a tire circumferential direction is arranged in the bead portion 1, and a bead filler 12 in which a cross section is formed in a triangular shape extending in the tire diametrical direction is arranged in a tire outer circumference of the bead 1a. Further, a rim strip rubber 17 having an excellent abrasion resistance is arranged in a portion which directly comes into contact with a rim 8.

The carcass layer 4 is constituted by the carcass ply 14 in which the cord is arranged at an angle of approximately 90 degree with respect to a tire equator line C, and is provided in each of a pair of bead portions 1. In the carcass ply 14, one end 14a is wound up to an inner side from an outer side of the first bead 1a, and the other end 14b is arranged in an inner side of the belt layer 6.

In the first aspect of the invention, it is preferable that the other end 14b of the carcass ply 14 is arranged in a range between 60 and 90 % of a width in both outer sides of a widest layer (normally an innermost layer) among the belt layers 6. Accordingly, it is possible to maintain a tire reinforcing effect on the basis of a cooperation with the belt layer 6, it is possible to achieve a weight saving of the tire and a rolling resistance and a riding comfortableness become improved.

An inner liner layer 5 for holding an air pressure is arranged in an inner circumferential side of the carcass layer 4, and a belt layer 6 for reinforcing on the basis of a hoop effect and a belt reinforcing layer 7 as occasion demands are arranged in a tire inner circumferential side of the tread portion 3. The belt layer 6 is constituted by a belt ply in which the cords are arranged in parallel at a predetermined angle with respect to the tire equator line C.

In this case, a steel wire or the like is used as the bead wire, and a steel, or an organic fiber such as a polyester, a rayon, a nylon, an aramid or the like, is used as the cord constituting the carcass layer 4 and the belt layer 6. A surface treatment, an adhesion treatment or the like is generally applied to these cords in order to increase an adhesive property with the rubber.

In the side wall portion 2, a side wall rubber 11 is arranged in an outer side, and a reinforcing rubber layer 9 approximately having a crescent cross sectional shape is arranged in an inner side. Accordingly, when an air pressure in an inner portion of the tire is lowered, a deflecting deformation of the tire is suppressed, and a run-flat travel can be executed. The reinforcing rubber layer 9 is constituted, for example, by a rubber layer in which a rubber hardness (a rubber hardness measured in accordance with a type A durometer hardness test of JISK6253, the same matter is applied to the below) is between 65 and 90 degree.
In this case, the reinforcing rubber layer 9 provided in the run-flat tire in accordance with the first aspect of the invention can employ any reinforcing rubber layer without being particularly limited by a hardness, a thickness and the like, as far as the reinforcing rubber layer is used in the conventional self supporting type run-flat tire. The reinforcing rubber layer 9 is not limited to a structure constituted by a single rubber layer, but may be constituted by a plurality of rubber layers which are different in a physical property such as the hardness or the like.

In the present embodiment, as shown in Fig. 2, there is further provided with an annular projecting portion 10 which is projecting to an outer side in a tire width direction from at least one bead portion 1 and has a second bead 1b. The annular projecting portion 10 is projecting to an outer side in the tire width direction outside of the rim flange 8a, and has an inner circumferential surface along an outer circumferential side curved surface of the rim flange 8a. Accordingly, the annular projecting portion 10 effectively holds the rim flange 8a, and can prevent the rim separation. It is preferable that the annular projecting portion 10 is formed in each of the bead portions 1 in both sides.

A bead 1b (corresponding to the second bead mentioned above) in which the bead wire is formed in an annular shape in the tire circumferential direction is arranged in the annular projecting portion 10. The bead 1b in accordance with the present embodiment is arranged in such a manner that a center position is positioned in a tire outer circumferential side outside an outermost diameter point of the rim flange 8a and in an outer side in the tire width direction, at a time of being installed to the rim. In this case, in the first aspect of the invention, the position at which the bead 1b is arranged is not particularly limited.

The reinforcing layer 16 is arranged approximately along the inner circumferential surface of the annular projecting portion 10, whereby it is possible to reinforce the inner circumferential surface of the annular projecting portion 10 so as to suppress an attrition. As the reinforcing layer 16, there is exemplified a chafer constituted by the steel cord, or the organic fiber such as the rayon, the nylon, the polyester, the aramid or the like.

The carcass ply 14 is wound up to the inner side from the outer side by the bead 1a as shown in Fig. 2, and one end 14a thereof is arranged near a bottom line of the bead filler 12. A height H of the bead filler 12 can be changed, for example, in a range between 15 and 65 mm, however, it is preferable that a height P of the one end 14a of the carcass ply 14 on the basis of the tire outer circumferential side end of the bead 1a is set to a range between 10 and 20 mm, in the light of a bead durability and a weight saving.

In this case, the cross sectional shapes of the annular projecting portion 10, the annular rubber body 13 and the bead filler 12 of the run-flat tire obtained by the first aspect of the invention are not limited to the shapes shown in the present embodiment.

### Method of manufacturing run-flat tire

Next, a description will be given of a method of manufacturing the run-flat tire in accordance with the present embodiment with reference to Figs. 3 to 5.

First, a cylindrical molding drum 20 is prepared. The molding rum 20 has a conventionally known diameter reducing and diameter increasing mechanism, and is provided with a bladder for executing a shaping or a diameter increasing mechanism having the same function in a center portion. Further, there is provided a bladder mechanism for winding up an outer end of the carcass as occasion demands.

Next, as shown in Fig. 3(a), there is executed a step of arranging the inner liner rubber 19, the reinforcement rubber member 18 reinforcing the side wall portions in both sides and the carcass ply 14 at the predetermined positions in the outer circumference of the molding drum 20. Specifically, the inner liner rubber 19 is arranged in such a manner that the center of the inner liner rubber 19 is positioned in the center of the outer circumference of the molding drum 20, and the reinforcement rubber member 18 is arranged in both sides spaced at the tread width from the center. Further, the carcass plies 14 are respectively arranged further in an outer side from a portion near an outer end in the drum width direction of the respective reinforcement rubber members 18. At this time, the structure is made such that the cords constituting the carcass ply 14 are arranged in the drum width direction.

In the present embodiment, there is shown an example in which the rim strip rubber 17 and the reinforcing layer 16 are arranged in the outer side in the width direction of the inner liner rubber 19. It is preferable that the rim strip rubber 17 is arranged in such a manner as to confront its end surface to the inner liner rubber 19, or in such a manner that the end portions are overlapped.

Next, as shown in Fig. 3(b), there is executed a step of arranging a pair of first beads 1a and the bead filler 12 somewhat outside of an inner end in the drum width direction of the carcass ply 14. The first bead 1a and the bead filler 12 may be arranged by being sequentially outside inserted, however, it is preferable to arrange the structure in which both the elements are integrally formed.

Next, as shown in Fig. 3(c), there is executed a step of deforming an inner side than the first bead 1a of the obtained molded product in a toroid shape. This deformation can be executed by the molding drum 20. At this time, the structure may be made such that a bead lock mechanism is provided in the molding drum 20, the bead 1a is clamped from a tire inner circumferential side via the rim strip rubber 17, the carcass ply 14 and the like. Accordingly, it is possible to precisely execute the deformation.
On the basis of this deformation, the one end 14a of the carcass ply 14 comes to a state of being sandwiched between the inner liner rubber 19 and the first bead 1a. Fig. 3(c) shows an example in which both side surfaces of the diameter increasing portion of the molding drum 20 is constituted by an approximately flat surface, however, it is preferable that both the side surfaces of the diameter increasing portion are formed in a curved surface which is convex to an outer side such as a tire inner surface shape.

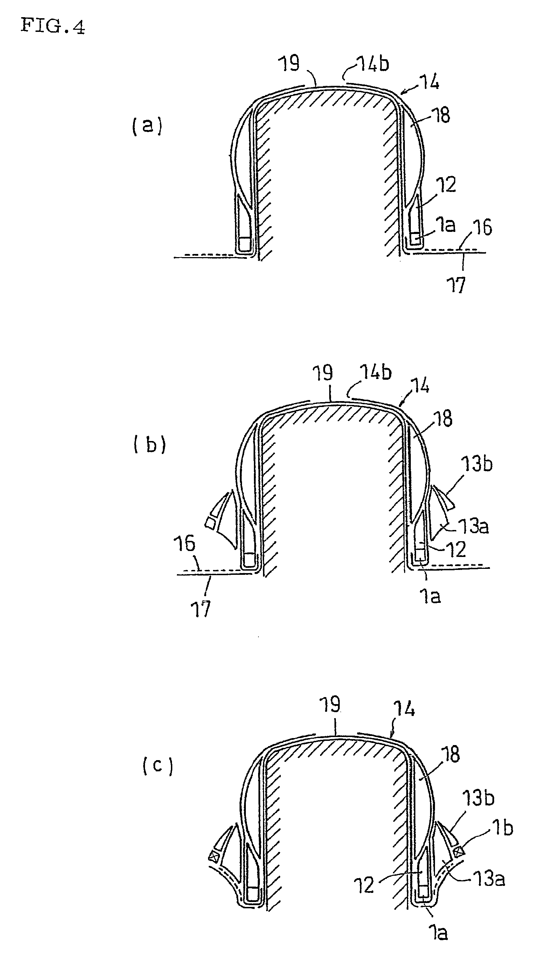

Next, as shown in Fig. 4(a), there is executed a step of winding up an outer end (the other end 14b) of each of the carcass plies 14 around an outer circumferential side of the molded product after being deformed so as to attach. The toroid-shaped molded product is formed by this step.

At this time, the wind-up of the carcass ply 14 can be executed individually or on the block by a manual work in a state of fixing the bead 1a by using a bead lock mechanism as occasion demands. Further, it is possible to easily wind up the carcass ply 14 by setting a rubber bag called as a bladder so as to apply an internal pressure. At this time, since the reinforcing layer 16 and the rubber strip rubber 17 are simultaneously wound up, the next step may be executed after interposing a separator between them and the carcass ply 14, and peeling the reinforcing layer 16 or the like.

The first aspect of the invention includes a step of attaching the rubber member 13 constructing the annular projecting portion to the side portion of the bead filler 12 of the toroid-shaped molded product, as shown in Fig. 4(b). The annular rubber body 13 is constituted by rubber members 13a and 13b and the like which are made of the same kind of material or two or more kinds of materials. The annular rubber body 13 is structured, for example, such that a rubber hardness is between 40 and 75 degree, and preferably has sufficient rigidity and crack resistance to stand against an impact repeatedly transmitted from the rim 8. The annular rubber body 13 is attached to an outer side in the tire width direction of the bead filler 12 while interposing the carcass ply 14.

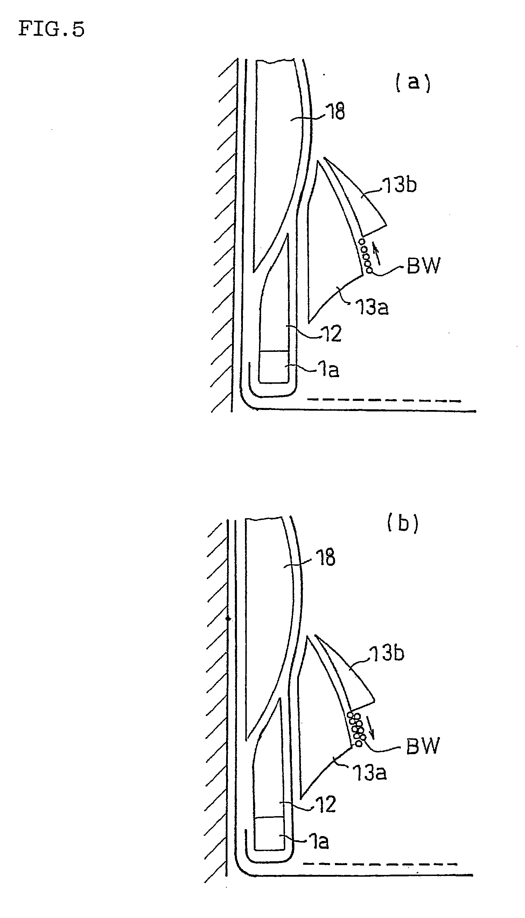

The first aspect of the invention includes a step of spirally attaching a cord BW to the rubber member 13 so as to form the second bead 1b while rotating the molded product attached around an axis, as shown in Fig. 4(c). Figs. 5(a) to 5(b) show the step in more detail. In an illustrated example, the cord BW is first attached spirally to the outer circumferential side from the inner circumferential side as shown by an arrow, however, may be attached in an inverse direction.

One cord BW may be attached or a plurality of cords BW may be simultaneously attached, however, it is preferable to attach one cord in the light of a uniformity, a strength, a productivity and the like. As a material of the cord BW, it is possible to use a steel wire, a steel cord, or an organic fiber such as a polyester, a rayon, a nylon, an aramid or the like. In other words, in the conventional method, since the annular bead is previously manufactured, it is hard to maintain the annular shape by the organic fiber, however, since the first aspect of the invention executes the attachment, the uniformity is improved even by using the organic fiber.

Further, in the light of making the adhesion between the cords easy, it is preferable to use the cord coated by the unvulcanized rubber. As the unvulcanized rubber mentioned above, there can be listed up the rubber which is used at a time of manufacturing the first bead, for example, a rubber in which a rubber viscosity is between 50 and 80 is used. In this case, the rubber viscosity is a value measured in accordance with "Mooney Viscosity Test" in "Unvulcanized Rubber Physical Test Method" of JIS K6300.

In the first aspect of the invention, it is sufficient that the cord BW is spirally attached, and the cord BW may go around at random (this is included in the spiral shape), however, it is preferable that the cord BW is first attached spirally to the same surface, as shown in Fig. 5(a). Further, it is preferable to repeatedly execute the step of spirally attaching the cord BW to the upper surface thereof, subsequently.

In the present embodiment, there is shown an example in which the cord BW is spirally attached at five laps on the first surface, at four laps on the next surface, at three laps and at two laps. It is easy to maintain the shape of the second bead 1b after the vulcanizing step by reducing the lap number step by step as mentioned above. Further, it is easy to maintain the shape of the second bead 1b after the vulcanizing step in the same manner by attaching at two laps or more on the topmost layer. In this case, it is possible to spirally attach the cord BW along the concave portion formed by two cords by spirally attaching the cord BW on the same surface and thereafter spirally attaching to the upper surface after turning.

Next, as shown in Fig. 4(c), the reinforcing layer 16 and the rim strip rubber 17 are wound up so as to be attached to the predetermined positions. Further, the side wall rubber 11 is arranged along the outer circumferential surface of the annular rubber body 13 from the annular projecting portion 10 toward the side wall portion 2. Thereafter, the belt layer 6 and the belt reinforcing layer 7 are formed in the tire outer circumferential side of the molded body, and the tread portion 3 is formed by arranging the tread rubber in the outer circumferential side thereof. A green tire obtained as mentioned above is vulcanized and molded after being introduced into a metal mold.

### Other embodiments of first aspect of the invention

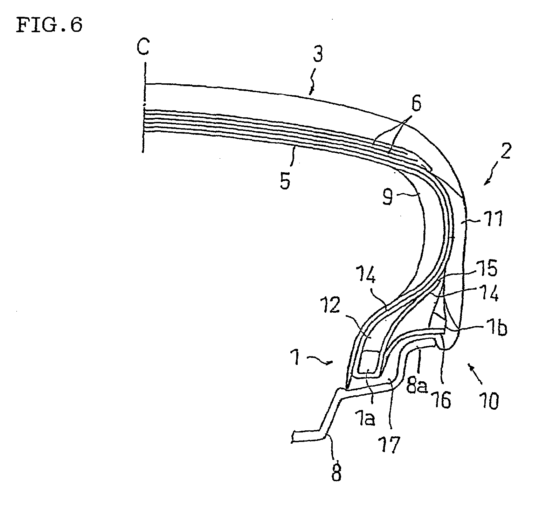

(1) In the embodiment mentioned above, there is shown the example that the toroid-shaped molded product in which the other end of the carcass ply is wound up from the outer side to the inner side is formed by using two carcass plies and winding up the outer end of each of the carcass plies so as to attach, however, it is possible to manufacture the run-flat tire having the same carcass structure as the conventional one as shown in Fig. 6, by using one carcass ply. Even in this case, it is possible to execute the step of forming the second bead 1b by spirally attaching the cord BW to the rubber member 13 while rotating the molded product around the axis, in the same manner as the embodiment mentioned above.

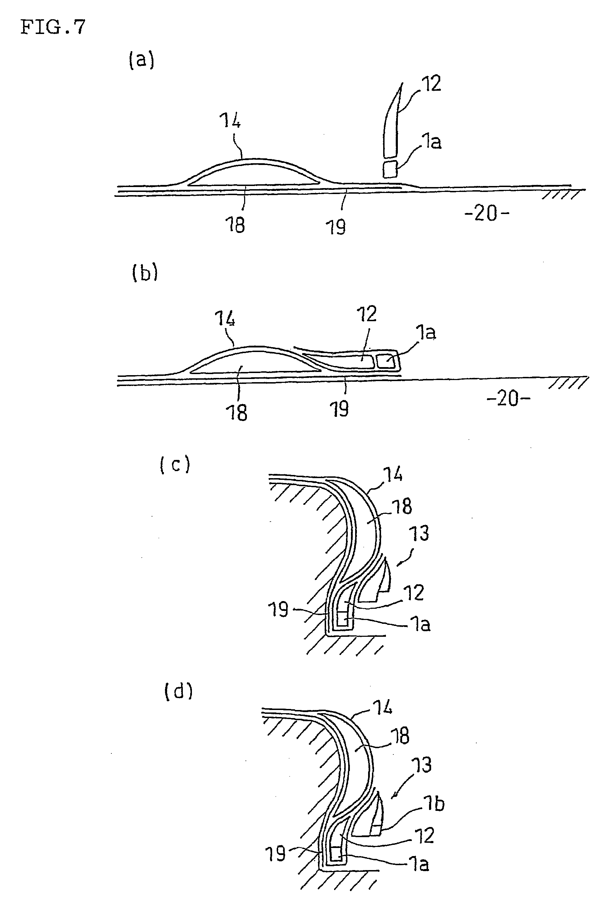

In other words, it is sufficient that the first aspect of the invention includes a step of arranging the reinforcement rubber member 18 and the carcass ply 14 reinforcing the inner liner rubber 19 and the side wall portions in both sides at the predetermined positions in the outer circumference of the molding drum 20, a step of arranging a pair of first beads 1a and the bead filler 12 and deforming the inner side inside of the first bead 1a in the toroid shape, and a step of winding up the end portion of the carcass ply 14 before or after the deformation so as to attach, as shown in Figs. 7(a) to 7(c).

Specifically, the cylindrical molding drum 20 as mentioned above is prepared, and the inner liner rubber 19, the reinforcement rubber member 18 reinforcing the side wall portions in both sides, and the carcass ply 14 are arranged at the predetermined positions of the outer circumference of the molding drum 20, as shown in Fig. 7(a). At this time, the inner liner rubber 19 is arranged in such a manner that the center of the inner rubber 19 is positioned to the center of the outer circumference of the molding drum 20, the reinforcement rubber member 18 is arranged in both sides so as to be spaced at the tread width from the center, and the carcass ply 14 is arranged in such a manner that the center of the carcass ply 14 is positioned in the center. At this time, the structure is made such that the cords constituting the carcass ply 14 are arranged in the drum width direction.

Although an illustration is omitted, the rim strip rubber 17 and the reinforcing layer 16 may be arranged in the outer side in the width direction of the inner liner rubber 19. It is preferable that the rim strip rubber 17 is arranged such that an end surface thereof is confronted with the inner liner rubber 19, or the end portions are overlapped.

Next, there is executed a step of arranging a pair of first beads 1a and the bead filler 12 at the position where the first bead 1a is arranged in the carcass ply 14. The first bead 1a and the bead filler 12 may be arranged so as to be sequentially outside inserted, but it is preferable to arrange a structure obtained by integrally forming the both.

Next, as shown in Fig. 7(b), there is executed a step of winding up the end portion of the carcass ply 14 so as to attach, however, this step may be executed after the step of deforming the molded product in the toroid shape. In accordance with this step, there is obtained a shape in which the first bead 1a and the bead filler 12 are sandwiched by the wound-up carcass ply 14.

Next, as shown in Fig. 7(c), there is executed a step of deforming the inner side inside of the first bead 1a of the obtained molded product in the toroid shape. In accordance with this step, the toroid-shaped molded product is formed. This deformation can be executed by the molding drum 20. At this time, the bead lock mechanism may be provided in the molding drum 20, and the bead 1a may be clamped from the tire inner circumferential side via the rim strip rubber 17, the carcass ply 14 and the like. Accordingly, it is possible to precisely execute the deformation.

Next, as shown in Fig. 7(c), the rubber member 13 constructing the annular projecting portion is attached to the side portion of the bead filler 12 of the toroid-shaped molded product, however, this step can be executed in the same manner as the embodiment mentioned above.

Further, as shown in Fig. 7(d), the second bead 1b is formed by spirally attaching the cord BW to the rubber member 13 while rotating the molded product attached around the axis, however, this step can be executed in the same manner as the embodiment mentioned above.

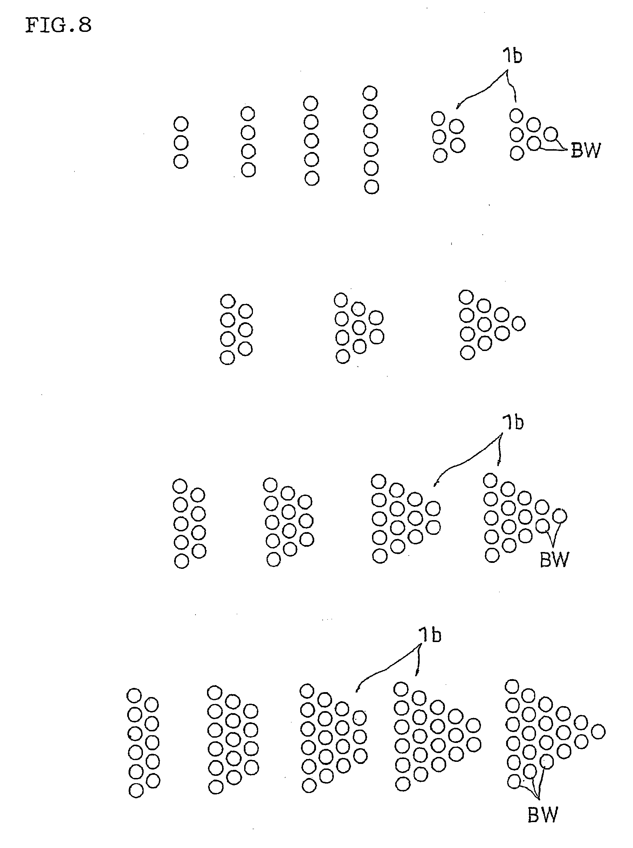

(2) In the embodiment mentioned above, there is shown the example that the cord is attached at five laps onto the first surface, at four laps onto the next surface, at three laps and two laps at a time of spirally attaching the cord, however, in the case of spirally attaching the cord BW so as to form the second bead 1b, various modes can be employed as shown in Fig. 8.

All of the illustrated shapes are formed in such a shape (a trapezoidal shape or a triangular shape) that the lap number is reduced toward the higher layer, however, may be formed in such a shape that the lap number is equal in each of the layers, such a shape as a square shape(a hexagonal shape or an octagonal shape) that the lap number is once increased and thereafter reduced, and the like.

In the shapes mentioned above, in most preferable, in the light of preventing the bead unseating and in the light of a rim assembling characteristic, a workability and a weight saving, the trapezoidal shape is most excellent as the shape of the second bead.

(3) In the embodiment mentioned above, there is shown the example that the molding is executed by using one sheet or plate-like material as the inner liner rubber, the reinforcement rubber member, the rim strip rubber, the side wall rubber, the tread rubber and the like, however, all of these members can be arranged by obtaining a predetermined shape by spirally winding a continuous rubber band-like member (a so-called strip construction method).

Specifically, it is possible to arrange the member in accordance with the strip construction method, by discharging the rubber band-like material from a rubber extrusion apparatus so as to attach and moving the attached position, while rotating the molding drum or the molded product around the axis. Various methods have been known as the strip construction method, and it is possible to employ any of them.

(4) In the embodiment mentioned above, there is shown the example that the rim strip rubber and the reinforcing layer are previously arranged in the outer side in the width direction of the inner liner rubber of the molding drum, however, the rim strip rubber and the reinforcing layer are arranged and are thereafter wound up, after executing the wind-up step of the carcass ply and thereafter attaching the rubber member constructing the annular projecting portion.

In accordance with this manufacturing method, it is possible to sequentially execute the wind-up step of the carcass ply and the wind-up step of the rim strip rubber and the reinforcing layer, by using the rubber bag called as the bladder.

### Embodiment of second aspect of the invention

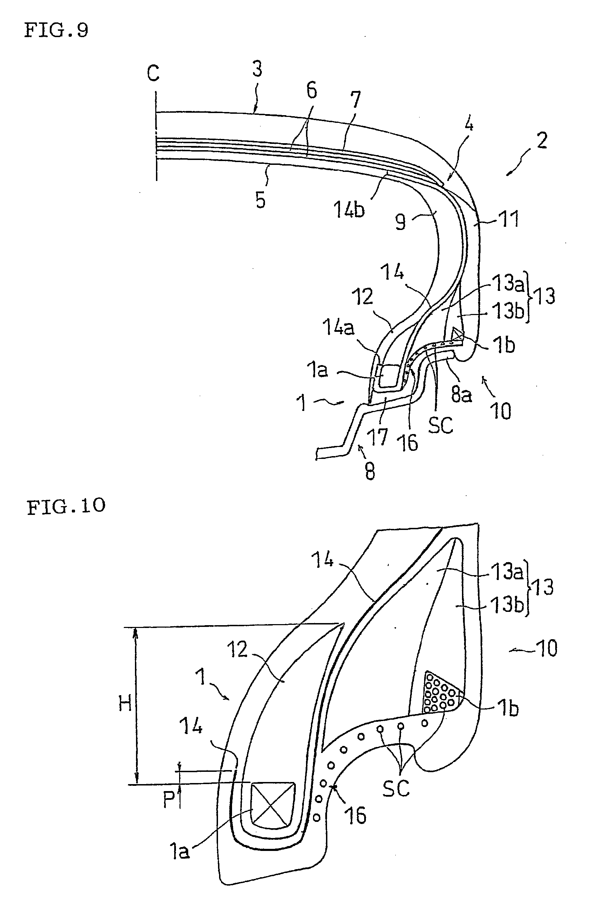

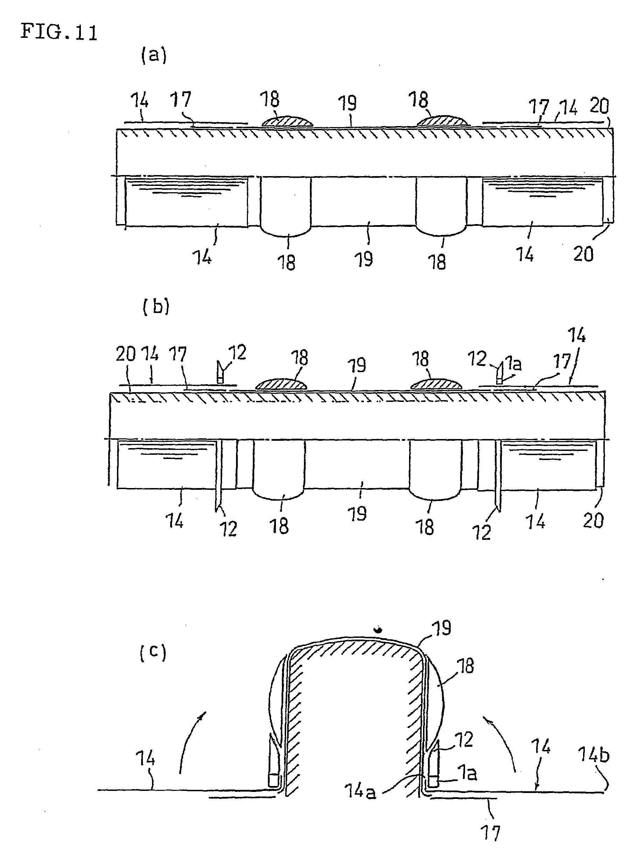

A description will be given below of an embodiment in accordance with the second aspect of the invention with reference to the accompanying drawings. Fig. 9 is a tire meridian cross sectional view showing an example of a run-flat tire in accordance with the second aspect of the invention, and Fig. 10 is a cross sectional view of a main portion schematically showing a bead portion thereof. Further, Figs. 11 to 13 are process charts showing an example of the manufacturing method in accordance with the second aspect of the invention.

A method of manufacturing a run-flat tire in accordance with the second aspect of the invention includes a step of respectively arranging an inner liner rubber, a reinforcement rubber member reinforcing side wall portions in both sides and a carcass ply at predetermined positions of an outer circumference of a molding drum, a step of arranging a pair of first beads and bead fillers and deforming an inner side inside of the first beads in a toroid shape, and a step of winding up an end portion of the carcass ply so as to attach before or after the deformation, thereby obtaining a toroid-shaped molded product.
Further, the manufacturing method in accordance with the second aspect of the invention includes a step of attaching a rubber member constructing an annular projecting portion to a side portion of the bead filler of the toroid-shaped molded product, and a step of spirally attaching the cord to the region opposing to the rim flange of the rubber member so as to form a reinforcing layer while rotating the molded product attached around an axis.

The present embodiment shows an example that the toroid-shaped molded product is formed by a step of arranging an inner liner rubber 19 and a reinforcement rubber member 18 reinforcing side wall portions in both sides at predetermined positions of an outer circumference of a molding drum 20, and arranging a carcass ply 14 in which a cord is arranged in a width direction further in an outer side from a portion near an outer end in a drum width direction of each of the reinforcement rubber members 18, a step of arranging a pair of first beads 1a and bead fillers 12 somewhat in an outer side than an inner end in the drum width direction of the carcass ply 14, a step of deforming an inner side inside of the first bead 1a of the obtained molded product in a toroid shape, and a step of winding up an outer end 14b of each of the carcass plies 14 around an outer circumferential side of the molded product after being deformed so as to attach thereto, as shown in Figs. 11 to 13.

First, a description will be given of the run-flat tire in accordance with the second aspect of the invention obtained by this embodiment.

### Run-flat tire of second aspect of the invention

The run-flat tire in accordance with the second aspect of the invention is provided with a pair of bead portions 1, side wall portions 2 extending to an outer side in a tire diametrical direction respectively from the bead portions 1, and a tread portion 3 provided between the side wall portions 2, as shown in Figs. 9 and 10. A bead 1a (corresponding to the first bead mentioned above) in which an assembly of the bead wires is formed in an annular shape in a tire circumferential direction is arranged in the bead portion 1, and a bead filler 12 in which a cross section is formed in a triangular shape extending in the tire diametrical direction is arranged in a tire outer circumference of the bead 1a. Further, it is preferable that a rim strip rubber 17 having an excellent abrasion resistance is arranged in a portion which directly comes into contact with a rim 8.

The carcass layer 4 is constituted by the carcass ply 14 in which the cord is arranged at an angle of approximately 90 degree with respect to a tire equator line C, and is provided in each of a pair of bead portions 1. In accordance with the present embodiment, there is shown an example in which the carcass ply 14 is structured such that one end 14a is wound up to an inner side from an outer side of the first bead 1a, and the other end 14b is arranged in an inner side of the belt layer 6.

In this embodiment, it is preferable that the other end 14b of the carcass ply 14 is arranged in a range between 60 and 90 % of a width in both outer sides of a widest layer (normally an innermost layer) in the belt layer 6. Accordingly, it is possible to maintain a tire reinforcing effect on the basis of a cooperation with the belt layer 6, it is possible to achieve a weight saving of the tire and a rolling resistance and a riding comfortableness become improved.

An inner liner layer 5 for holding an air pressure is arranged in an inner circumferential side of the carcass layer 4, and a belt layer 6 for reinforcing on the basis of a hoop effect and a belt reinforcing layer 7 as occasion demands are arranged in a tire inner circumferential side of the tread portion 3. The belt layer 6 is constituted by a belt ply in which the cords are arranged in parallel at a predetermined angle with respect to the tire equator line C.

In this case, a steel wire or the like is used as the bead wire, and a steel, or an organic fiber such as a polyester, a rayon, a nylon, an aramid or the like, is used as the cord constituting the carcass layer 4 and the belt layer 6. A surface treatment, an adhesion treatment or the like is generally applied to these cords in order to increase an adhesive property with the rubber.

In the side wall portion 2, a side wall rubber 11 is arranged in an outer side, and a reinforcing rubber layer 9 approximately having a crescent cross sectional shape is arranged in an inner side. Accordingly, when an air pressure in an inner portion of the tire is lowered, a deflecting deformation of the tire is suppressed, and a run-flat travel can be executed. The reinforcing rubber layer 9 is constituted, for example, by a rubber layer in which a rubber hardness (a rubber hardness measured in accordance with a type A durometer hardness test of JISK6253, the same matter is applied to the below) is between 65 and 90 degree.
In this case, the reinforcing rubber layer 9 provided in the run-flat tire in accordance with the second aspect of the invention can employ any reinforcing rubber layer without being particularly limited by a hardness, a thickness and the like, as far as the reinforcing rubber layer is used in the conventional self supporting type run-flat tire. The reinforcing rubber layer 9 is not limited to a structure constituted by a single rubber layer, but may be constituted by a plurality of rubber layers which are different in a physical property such as the hardness or the like.

In the second aspect of the invention, as shown in Fig. 10, there is further provided with an annular projecting portion 10 which is projecting to an outer side in a tire width direction from at least one bead portion 1 and has a second bead 1b. The annular projecting portion 10 is projecting to an outer side in the tire width direction than the rim flange 8a, and has an inner circumferential surface along an outer circumferential side curved surface of the rim flange 8a. Accordingly, the annular projecting portion 10 effectively holds the rim flange 8a, and can prevent the rim separation. It is preferable that the annular projecting portion 10 is formed in each of the bead portions 1 in both sides.

A bead 1b (corresponding to the second bead mentioned above) in which the bead wire is formed in an annular shape in the tire circumferential direction is arranged in the annular projecting portion 10. The bead 1b in accordance with the present embodiment is arranged in such a manner that a center position is positioned in a tire outer circumferential side outside of an outermost diameter point of the rim flange 8a and in an outer side in the tire width direction, at a time of being installed to the rim. In this case, in the second aspect of the invention, the position at which the bead 1b is arranged is not particularly limited.

The run-flat tire in accordance with the second aspect of the invention is provided with the reinforcing layer 16 in which a cord SC is spirally arranged in a region opposing to the rim flange of the annular projecting portion 10, and the second bead 1b is formed by spirally winding the cord SC continuing from the reinforcing layer 16.

The reinforcing layer 16 is arranged approximately along the inner circumferential surface of the annular projecting portion 10, whereby it is possible to reinforce the inner circumferential surface of the annular projecting portion 10 so as to suppress an attrition. As the cord SC constituting the reinforcing layer 16 and the second bead 1b, there is exemplified the steel cord, or the organic fiber such as the rayon, the nylon, the polyester, the aramid or the like.

The carcass ply 14 is wound up to the inner side from the outer side by the bead 1a as shown in Fig. 10, and one end 14a thereof is arranged near a bottom line of the bead filler 12. A height H of the bead filler 12 can be changed, for example, in a range between 15 and 65 mm, however, it is preferable that a height P of the one end 14a of the carcass ply 14 on the basis of the tire outer circumferential side end of the bead 1a is set to a range between 10 and 20 mm, in the light of a bead durability and a weight saving.

In this case, the cross sectional shapes of the annular projecting portion 10, the annular rubber body 13 and the bead filler 12 of the run-flat tire obtained by the second aspect of the invention are not limited to the shapes shown in the present embodiment.

### Method of manufacturing run-flat tire of second aspect of the invention

Next, a description will be given of a method of manufacturing the run-flat tire in accordance with the second aspect of the invention with reference to Figs. 11 to 13. Steps shown in Figs. 1 (a) to 12(b) in accordance with the second aspect of the invention is different from the steps shown in Figs. 3 and 4 in accordance with the first aspect of the invention only in a point that the reinforcing layer 16 is not provided in Figs. 11 (a) to 12(b). First, a cylindrical molding drum 20 which is similar to the first aspect of the invention is prepared.

Next, as shown in Fig. 11 (a), there is executed a step of arranging the inner liner rubber 19, the reinforcement rubber member 18 reinforcing the side wall portions in both sides and the carcass ply 14 at the predetermined positions in the outer circumference of the molding drum 20. Specifically, it is possible to employ the same steps as those of the first aspect of the invention.
Next, as shown in Fig. 11 (b), there is executed a step of arranging a pair of first beads 1a and the bead filler 12 somewhat outside of an inner end in the drum width direction of the carcass ply 14. Specifically, it is possible to employ the same steps as those of the first aspect of the invention.

Next, as shown in Fig. 11 (c), there is executed a step of deforming an inner side than the first bead 1a of the obtained molded product in a toroid shape. Specifically, it is possible to employ the same steps as those of the first aspect of the invention.

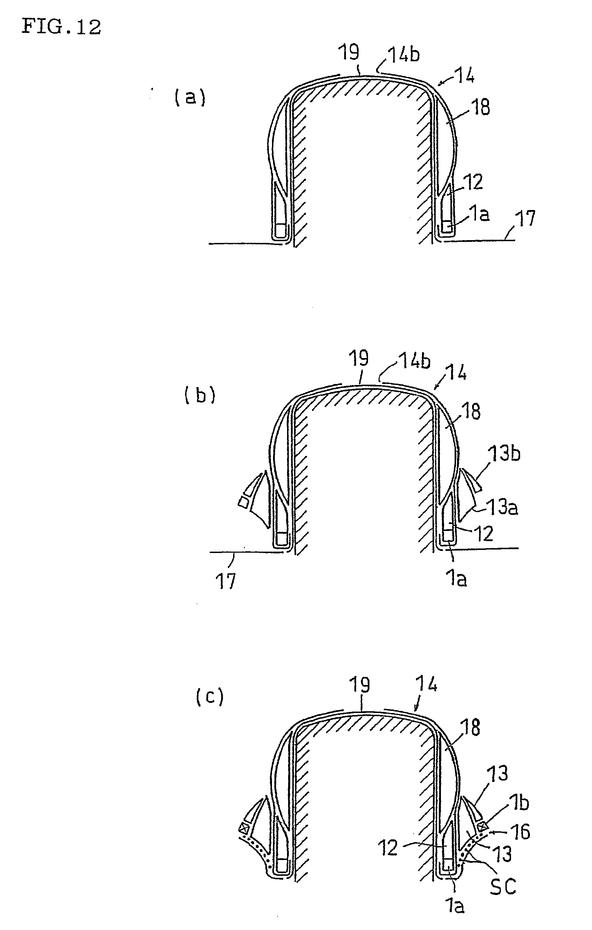

Next, as shown in Fig. 12(a), there is executed a step of winding up an outer end (the other end 14b) of each of the carcass plies 14 around an outer circumferential side of the molded product after being deformed so as to attach. In accordance with this step, the toroid-shaped molded product is formed. Specifically, it is possible to employ the same steps as those of the first aspect of the invention.

At this time, the wind-up of the carcass ply 14 can be executed individually or on the block by a manual work in a state of fixing the bead 1a by using a bead lock mechanism as occasion demands. Further, it is possible to easily wind up the carcass ply 14 by setting a rubber bag called as a bladder so as to apply an internal pressure. At this time, since the rubber strip rubber 17 is simultaneously wound up, the next step may be executed after interposing a separator between them and the carcass ply 14, and peeling the rim strip rubber 17.

The second aspect of the invention includes a step of attaching the rubber member 13 constructing the annular projecting portion to the side portion of the bead filler 12 of the toroid-shaped molded product, as shown in Fig. 12(b). The annular rubber body 13 is constituted by rubber members 13a and 13b and the like which are made of the same kind of material or two or more kinds of materials. The annular rubber body 13 is structured, for example, such that a rubber hardness is between 40 and 75 degree, and preferably has sufficient rigidity and crack resistance to stand against an impact repeatedly transmitted from the rim 8. The annular rubber body 13 is attached to an outer side in the tire width direction of the bead filler 12 while interposing the carcass ply 14.

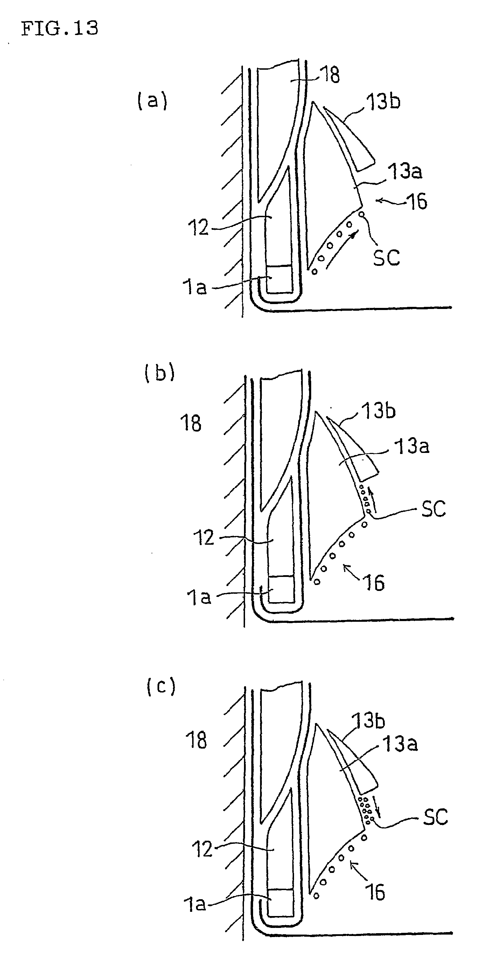

The second aspect of the invention includes a step of spirally attaching a cord SC to the region opposing to the rim flange of the rubber member 13 so as to form the reinforcing layer 16 while rotating the molded product attached around an axis, as shown in Fig. 12(c). In the present embodiment, there is shown an example including a step of spirally attaching the cord SC from the tire inner circumferential side to the outer circumferential side so as to form the reinforcing layer 16, and spirally attaching the cord SC continuing from the reinforcing layer 16 to the rubber member 13 so as to form the second bead 1b while rotating the molded product around the axis, in succession to the forming step. Figs. 13(a) to 13(c) show these steps in more detail.

One cord SC may be attached or a plurality of cords SC may be simultaneously attached, however, it is preferable to attach one cord in the light of a uniformity, a strength, a productivity and the like. As a material of the cord SC, it is possible to use a steel wire, a steel cord, or an organic fiber such as a polyester, a rayon, a nylon, an aramid or the like. In other words, in the conventional method, since the annular bead is previously manufactured, it is hard to maintain the annular shape by the organic fiber, however, since the second aspect of the invention executes the attachment, the uniformity is improved even by using the organic fiber.

Further, in the light of making the adhesion between the cords easy, it is preferable to use the cord coated by the unvulcanized rubber. As the unvulcanized rubber mentioned above, there can be listed up the rubber which is used at a time of manufacturing the first bead, for example, a rubber in which a rubber viscosity is between 50 and 80 is used. In this case, the rubber viscosity is a value measured in accordance with "Mooney Viscosity Test" in "Unvulcanized Rubber Physical Test Method" of JIS K6300.

In the second aspect of the invention, it is preferable to first spirally attach the cord SC to the same surface at a time of forming the reinforcing layer 16. In the illustrated example, the cord SC is first attached spirally to the outer circumferential side from the inner circumferential side as shown by an arrow, however, in the case of forming the reinforcing layer 16 and the second bead 1b without continuing, it is possible to attach in an inverse direction to the arrow.

In the manufacturing method in accordance with the second aspect of the invention, as the region to which the cord SC is attached at a time of forming the reinforcing layer 16, it is possible to employ a region including a part or a whole of the region opposing to the rim flange, for example, it is possible to extend to a side portion or a lower portion of the first bead 1a, or extend to a side portion of the second bead 1b. Further, at a time of spirally attaching the cord SC, it is preferable that a pitch (a center distance) of the cord SC is between 1.5 and 3 mm. If the pitch is larger than this, there is a tendency that an effect of a resistance against the bead unseating is lowered.

Further, at a time of forming the second bead 1b, it is sufficient that the cord SC is spirally attached, and the cord SC may go around at random (this is included in the spiral shape), however, it is preferable that the cord SC is first attached spirally to the same surface, as shown in Fig. 13(b). Further, as shown in Fig. 13(c), it is preferable to repeatedly execute the step of spirally attaching the cord SC to the upper surface thereof, subsequently.

In the present embodiment, at a time of forming the second bead 1b, there is shown an example in which the cord SC is spirally attached at five laps on the first surface, at four laps on the next surface, at three laps and at two laps. It is easy to maintain the shape of the second bead 1b after the vulcanizing step by reducing the lap number step by step as mentioned above. Further, it is easy to maintain the shape of the second bead 1b after the vulcanizing step in the same manner by attaching at two laps or more on the topmost layer. In this case, it is possible to spirally attach the cord SC along the concave portion formed by two cords by spirally attaching the cord SC on the same surface and thereafter spirally attaching to the upper surface after turning.

Next, as shown in Fig. 12(c), the rim strip rubber 17 is wound up so as to be attached to the predetermined positions. Further, the side wall rubber 11 is arranged along the outer circumferential surface of the annular rubber body 13 from the annular projecting portion 10 toward the side wall portion 2. Thereafter, the belt layer 6 and the belt reinforcing layer 7 are formed in the tire outer circumferential side of the molded body, and the tread portion 3 is formed by arranging the tread rubber in the outer circumferential side thereof.

### Other embodiments of second aspect of the invention

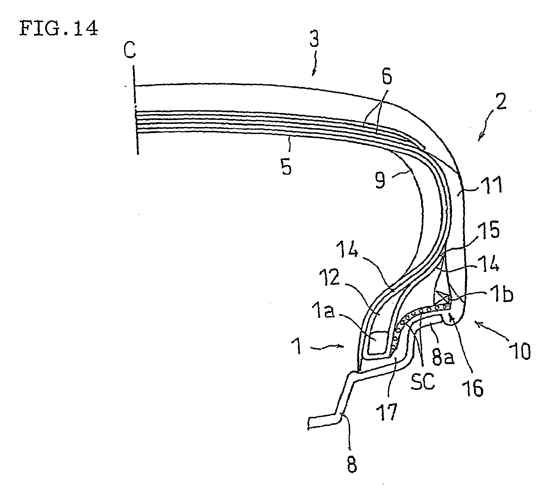

(1) In the embodiment mentioned above, there is shown the example that the toroid-shaped molded product in which the other end of the carcass ply is wound up from the outer side to the inner side is formed by using two carcass plies and winding up the outer end of each of the carcass plies so as to attach, however, it is possible to manufacture the run-flat tire having the same carcass structure as the conventional one as shown in Fig. 14, by using one carcass ply. Even in this case, it is possible to execute the step of forming the reinforcing layer 16 by spirally attaching the cord SC to the region opposing to the rim flange of the rubber member 13 while rotating the molded product around the axis, in the same manner as the embodiment mentioned above.

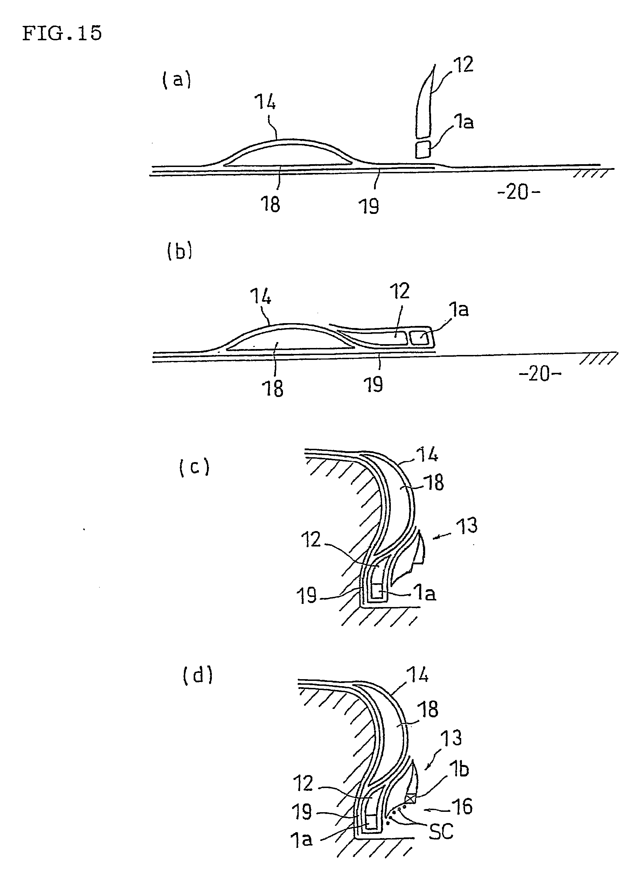

In other words, it is sufficient that the second aspect of the invention includes a step of arranging the reinforcement rubber member 18 and the carcass ply 14 reinforcing the inner liner rubber 19 and the side wall portions in both sides at the predetermined positions in the outer circumference of the molding drum 20, a step of arranging a pair of first beads 1a and the bead filler 12 and deforming the inner side than the first bead 1a in the toroid shape, and a step of winding up the end portion of the carcass ply 14 before or after the deformation so as to attach, as shown in Figs. 15(a) to 15(c).

The steps shown in Figs. 15(a) to 15(c) can specifically employ the same steps as the steps shown in Figs. 7(a) to 7(c) of the first aspect of the invention.

Further, as shown in Fig. 15(d), the reinforcing layer 16 is formed by spirally attaching the cord SC to the region opposing to the rim flange of the rubber member 13 while rotating the molded product attached around the axis, however, this step and the thereafter steps can be executed in the same manner as the embodiment mentioned above.

(2) In the embodiment mentioned above, there is shown the example of successively forming the reinforcing layer and the second bead by the continuous cord, however, the reinforcing layer and the second bead may be formed by the other cords. In this case, the second bead may use the structure independently manufactured as the assembly of the bead wire by spirally winding the bead wire in the same manner as the conventional method.

(3) In the embodiment mentioned above, at a time of forming the second bead 1b, there is shown the example that the cord is attached at five laps onto the first surface, at four laps onto the next surface, at three laps and two laps at a time of spirally attaching the cord, however, in the case of spirally attaching the cord SC so as to form the second bead 1b, various modes can be employed as shown in Fig. 8.

(4) In the embodiment mentioned above, there is shown the example that the molding is executed by using one sheet or plate-like material as the inner liner rubber, the reinforcement rubber member, the rim strip rubber, the side wall rubber, the tread rubber and the like, however, all of these members can be arranged by obtaining a predetermined shape by spirally winding a continuous rubber band-like member (a so-called strip construction method). Specifically, it is possible to employ the same step as the other embodiment of the first aspect of the invention.

(5) In the embodiment mentioned above, there is shown the example that the rim strip rubber is previously arranged in the outer side in the width direction of the inner liner rubber of the molding drum, however, the rim strip rubber is arranged and are thereafter wound up, after executing the wind-up step of the carcass ply and thereafter attaching the rubber member constructing the annular projecting portion.

In accordance with this manufacturing method, it is possible to sequentially execute the wind-up step of the carcass ply and the wind-up step of the rim strip rubber and the reinforcing layer, by using the rubber bag called as the bladder.

## Claims

1. A method of manufacturing a run-flat tire comprising:
- a step of respectively arranging an inner liner rubber (19), a reinforcement rubber member (18) reinforcing side wall portions (2) at both sides and a carcass ply (14) at predetermined positions of an outer circumference of a molding drum (20);
- a step of arranging a pair of first beads (1a) and bead fillers (12) and deforming the inner side inside of the first beads (1a) into a toroid shape;
- a step of winding up an end portion of the carcass ply (14) so as to attach it before or after the deformation;
- a step of attaching a rubber member (13) constructing an annular projecting portion (10) to a side portion of the bead filler (12) of the toroid-shaped molded product; and
- a step of spirally attaching a cord (BW) to the rubber member (13) so as to form a second bead (1b) while rotating the molded product attached around an axis.

2. The method according to claim 1,
wherein the carcass ply (14) in which a cord is arranged, is arranged in a width direction further outside from a portion near an outer end in a drum width direction of each of the reinforcement rubber members (18),
wherein the pair of first beads (1a) and bead fillers (12) are arranged somewhat outside of an inner end in the drum width direction of the carcass ply (14), and
wherein an outer end of each of the carcass plies (14) is wound-up around an outer circumferential side of the molded product after being deformed so as to be attached thereto.

3. The method according to claim 1 or 2,
wherein the cord (BW) is constituted by a cord coated by an unvulcanized rubber, and wherein a step is repeatedly executed of spirally attaching the cord (BW) to the same surface and thereafter subsequently attaching the cord (BW) to a top surface thereof.

4. A method of manufacturing a run-flat tire comprising:
- a step of respectively arranging an inner liner rubber (19), a reinforcement rubber member (18) reinforcing side wall portions (2) at both sides and a carcass ply (14) at predetermined positions of an outer circumference of a molding drum (20);
- a step of arranging a pair of first beads (1a) and bead fillers (12) and deforming the inner side inside of the first beads (1a) into a toroid shape;
- a step of winding up an end portion of the carcass ply (14) so as to attach it before or after the deformation;
- a step of attaching a rubber member (13) constructing an annular projecting portion (10) to a side portion of the bead filler (12) of the toroid-shaped molded product; and
- a step of spirally attaching a cord (SC) to a region opposing to a rim flange (8a) of the rubber member (13) so as to form a reinforcing layer (16) while rotating the molded product attached around an axis.

5. The method according to claim 4,
wherein the method includes a step of forming the reinforcing layer (16) by spirally attaching the cord (SC) from a tire inner circumferential side to a tire outer circumferential side, and a step of forming a second bead (1b) by spirally attaching the cord (SC) continuing from the reinforcing layer (16) to the rubber member (18) while rotating the molded product around an axis in succession to the forming step.

6. The method according to claim 4 or 5,
wherein the cord (SC) is constituted by a cord coated by an unvulcanized rubber, and wherein a step is repeatedly executed of spirally attaching the cord to the same surface and thereafter subsequently attaching the cord (SC) to a top surface thereof, in the step of forming the second bead (1b).

7. The method according to any one of claims 4 to 6,
wherein a carcass ply (14) in which a cord is arranged, is arranged in a width direction outside from a portion near an outer end in a drum width direction of each of the reinforcement rubber members (18),
wherein the pair of first beads (1a) and bead fillers (12) are arranged somewhat outside of an inner end in the drum width direction of the carcass ply (14), and
wherein an outer end of each of the carcass plies (14) is wound-up around an outer circumferential side of the molded product after being deformed so as to be attached thereto.

8. A run-flat tire comprising:
- a pair of bead portions (1) having an annular first bead (1a) and a bead filler (12) arranged in a tire outer circumferential side of the first bead (1a);
- side wall portions (2) respectively extending to an outer side in a tire diametrical direction from the bead portions (1);
- a tread portion (3) provided between the side wall portions (2);
- a belt layer (6) provided at the tire inner circumferential side of the tread portion (3);
- a carcass layer (4) constituted by a carcass ply (14) wound up by the first bead (1a);
- a reinforcing rubber layer (9) arranged in the side wall portion (2); and
- an annular projecting portion (10) projecting to an outer side in a tire width direction from the bead portion (1), and having a second bead (1b),
**characterized in that** a reinforcing layer (16) in which a cord (BW, SC) is spirally arranged is provided in a region opposite to a rim flange (8a) of the annular projecting portion (10), and the second bead (1b) is formed by a spirally wound cord (BW, SC) continuing from the reinforcing layer (16).

## Patentansprüche

1. Verfahren zum Herstellen eines Notlaufreifens,
das folgende Schritte aufweist:
- einen Schritt, in dem jeweils ein Innenauskleidungs-Gummimaterial (19), ein Verstärkungs-Gummielement (18), das Seitenwandbereiche (2) auf beiden Seiten verstärkt, und eine Karkassenlage (14) in vorbestimmten Positionen eines Außenumfangs einer Formtrommel (20) angeordnet werden;
- einen Schritt, in dem ein Paar erster Wulste (1a) und Wulstfüller (12) angeordnet wird und die Innenseite innenseitig von den ersten Wulsten (1a) in eine Toroid-Form verformt wird;
- einen Schritt, in dem ein Endbereich der Karkassenlage (14) zum Befestigen desselben vor oder nach der Verformung herumgewickelt wird;
- einen Schritt, in dem ein Gummielement (13), das einen ringförmigen vorstehenden Bereich (10) bildet, an einem Seitenbereich des Wulstfüllers (12) des toroidförmigen Formteils angebracht wird; und
- einen Schritt, in dem ein Cord (BW) an dem Gummielement (13) spiralförmig angebracht wird, um einen zweiten Wulst (1b) zu bilden, während das befestigte Formteil dabei um eine Achse rotationsmäßig bewegt wird.

2. Verfahren nach Anspruch 1,
wobei die Karkassenlage (14), in der ein Cord angeordnet wird, in Breitenrichtung weiter außen als ein in der Nähe eines äußeren Endes in der Trommelbreitenrichtung gelegener Bereich von jedem der Verstärkungs-Gummielemente (18) angeordnet wird,
wobei das Paar der ersten Wulste (1a) und Wulstfüller (12) geringfügig weiter außen als ein in der Trommelbreitenrichtung angeordnetes inneres Ende der Karkassenlage (14) angeordnet wird, und
wobei ein äußeres Ende von jeder der Karkassenlagen (14) um eine Außenumfangsseite des Formteils nach der Verformung herumgewickelt wird, um an diesem befestigt zu werden.

3. Verfahren nach Anspruch 1 oder 2,
wobei der Cord (BW) durch einen Cord gebildet wird, der mit einem unvulkanisierten Gummimaterial beschichtet ist, und wobei wiederholt ein Schritt ausgeführt wird, in dem der Cord (BW) spiralförmig an derselben Oberfläche angebracht wird und danach der Cord (BW) anschließend an einer oberen Oberfläche davon angebracht wird.

4. Verfahren zum Herstellen eines Notlaufreifens,
das folgende Schritte aufweist:
- einen Schritt, in dem jeweils ein Innenauskleidungs-Gummimaterial (19), ein Verstärkungs-Gummielement (18), das Seitenwandbereiche (2) auf beiden Seiten verstärkt, und eine Karkassenlage (14) in vorbestimmten Positionen eines Außenumfangs einer Formtrommel (20) angeordnet werden;
- einen Schritt, in dem ein Paar erster Wulste (1a) und Wulstfüller (12) angeordnet wird und die Innenseite innenseitig von den ersten Wulsten (1a) in eine Toroid-Form verformt wird;
- einen Schritt, in dem ein Endbereich der Karkassenlage (14) zum Befestigen desselben vor oder nach der Verformung herumgewickelt wird;
- einen Schritt, in dem ein Gummielement (13), das einen ringförmigen vorstehenden Bereich (10) bildet, an einem Seitenbereich des Wulstfüllers (12) des toroidförmigen Formteils angebracht wird; und
- einen Schritt, in dem ein Cord (SC) an einem Bereich spiralförmig angebracht wird, der einem Felgenhorn (8a) des Gummielements (13) gegenüberliegt, um somit eine Verstärkungsschicht (16) zu bilden, während das befestigte Formteil dabei um eine Achse rotationsmäßig bewegt wird.

5. Verfahren nach Anspruch 4,
wobei das Verfahren einen Schritt beinhaltet, in dem die Verstärkungsschicht (16) gebildet wird durch spiralförmiges Anbringen des Cords (SC) von einer Reifeninnenumfangsseite zu einer Reifenaußenumfangsseite, sowie einen Schritt beinhaltet, in dem ein zweiter Wulst (1b) gebildet wird, indem anschließend an den Schritt der Bildung der Cord (SC) in Fortsetzung von der Verstärkungsschicht (16) zu dem Gummielement (18) spiralförmig angebracht wird, während das Formteil um eine Achse rotationsmäßig bewegt wird.

6. Verfahren nach Anspruch 4 oder 5,
wobei der Cord (SC) durch einen Cord gebildet wird, der mit einem unvulkanisierten Gummimaterial beschichtet ist, und wobei in dem Schritt zum Bilden des zweiten Wulstes (1b) wiederholt ein Schritt ausgeführt wird,
in dem der Cord (SC) spiralförmig an derselben Oberfläche angebracht wird und danach der Cord (SC) anschließend an einer oberen Oberfläche davon angebracht wird.

7. Verfahren nach einem der Ansprüche 4 bis 6,
wobei eine Karkassenlage (14), in der ein Cord angeordnet wird, in Breitenrichtung weiter außen als ein in der Nähe eines äußeren Endes in der Trommelbreitenrichtung gelegener Bereich von jedem der Verstärkungs-Gummielemente (18) angeordnet wird,
wobei das Paar der ersten Wulste (1a) und Wulstfüller (12) geringfügig weiter außen als ein in der Trommelbreitenrichtung angeordnetes inneres Ende der Karkassenlage (14) angeordnet wird, und
wobei ein äußeres Ende von jeder der Karkassenlagen (14) um eine Außenumfangsseite des Formteils nach der Verformung herumgewickelt wird, um an diesem befestigt zu werden.

8. Notlaufreifen, der folgendes aufweist:
- ein Paar Wulstbereiche (1) mit einem ringförmigen ersten Wulst (1a) und einem Wulstfüller (12), der auf einer Reifenaußenumfangsseite des ersten Wulstes (1a) angeordnet ist;
- Seitenwandbereiche (2), die sich von den Wulstbereichen (1) in Reifendurchmesserrichtung jeweils zu einer Außenseite erstrecken;
- einen Laufflächenbereich (3), der zwischen den Seitenwandbreichen (2) vorgesehen ist;
- eine Gürtellage (6), die auf der Reifeninnenumfangsseite des Laufflächenbereichs (3) vorgesehen ist;
- eine Karkassenschicht (4), die aus einer um den ersten Wulst (1a) herumgewickelten Karkassenlage (14) gebildet ist;
- eine Verstärkungsgummischicht (9), die in dem Seitenwandbereich (2) angeordnet ist; und
- einen ringförmigen vorstehenden Bereich (10), der von dem Wulstbereich (1) in Reifenbreitenrichtung zu einer Außenseite vorsteht und der einen zweiten Wulst (1b) aufweist,
**dadurch gekennzeichnet,**
**daß** eine Verstärkungsschicht (16), in der ein Cord (BW, SC) spiralförmig angeordnet ist, in einem Bereich gegenüber von einem Felgenhorn (8a) des ringförmigen vorstehenden Bereichs (10) angeordnet ist, und daß der zweite Wulst (1b) durch einen spiralförmig gewickelten Cord (BW, SC) gebildet ist, der sich von der Verstärkungsschicht (16) fortsetzt.

## Revendications

1. Procédé de fabrication d'un pneumatique pour roulage à plat, comprenant :
- une étape consistant à agencer respectivement un caoutchouc de doublage intérieur (19), un élément en caoutchouc de renforcement (18) qui renforce des portions de parois latérales (2) sur les deux côtés, et une nappe de carcasse (14) à des positions prédéterminées d'une circonférence extérieure d'un tambour de moulage (20);
- une étape consistant à agencer une paire de premiers talons (1a) et d'éléments de remplissage de talon (12) et à déformer le côté interne à l'intérieur des premiers talons (1a) pour lui donner une forme toroïdale;
- une étape consistant à enrouler une portion terminale de la nappe de carcasse (14) de manière à l'attacher avant ou après la déformation;
- une étape consistant à attacher un élément caoutchouc (13) en réalisant une portion en projection annulaire (10) sur une portion latérale de l'élément de remplissage de talon (12) du produit moulé sous forme toroïdale; et
- une étape consistant à attacher en spirale un câblé (BW) sur l'élément en caoutchouc (13) de manière à former un second talon (1b) tout en faisant tourner le produit moulé attaché autour d'un axe.

2. Procédé selon la revendication 1,
dans lequel la nappe de carcasse (14) dans laquelle est agencé un câblé, est agencée dans une direction en largeur plus loin à l'extérieur depuis une portion proche d'une extrémité extérieure dans une direction en largeur du tambour de chacun des éléments en caoutchouc de renforcement (18),
dans lequel la paire de premiers talons (1a) et d'éléments de remplissage de talon (12) sont agencés quelque peu à l'extérieur d'une extrémité intérieure dans la direction en largeur du tambour de la nappe de carcasse (14), et dans lequel une extrémité extérieure de chacune des nappes de carcasse (14) est enroulée autour d'un côté circonférentiel extérieur du produit moulé après avoir été déformée de manière à être attachée à celui-ci.

3. Procédé selon la revendication 1 ou 2,
dans lequel le câblé (BW) est constitué par un câblé revêtu de caoutchouc non vulcanisé, et dans lequel on exécute de façon répétée une étape consistant à attacher en spirale le câblé (BW) sur la même surface et ensuite à attacher ultérieurement le câblé (BW) sur une surface supérieure de celui-ci.

4. Procédé de fabrication d'un pneumatique pour roulage à plat, comprenant :
- une étape consistant à agencer respectivement un caoutchouc de doublage intérieur (19), un élément en caoutchouc de renforcement (18) qui renforce des portions de parois latérales (2) sur les deux côtés et une nappe de carcasse (14) à des positions prédéterminées d'une circonférence extérieure d'un tambour de moulage (20);
- une étape consistant à agencer une paire de premiers talons (1a) et d'éléments de remplissage de talon (12), et à déformer le côté interne à l'intérieur des premiers talons (1a) pour lui donner une forme toroïdale;
- une étape consistant à enrouler une portion terminale de la nappe de carcasse (14) de manière à l'attacher avant ou après la déformation;
- une étape consistant à attacher un élément en caoutchouc (13) en constituant une portion en projection annulaire (10) sur une portion latérale de l'élément de remplissage de talon (12) du produit moulé sous forme toroïdale; et
- une étape consistant à attacher en spirale un câblé (SC) sur une région à l'opposé d'une bride de bordure (8a) de l'élément en caoutchouc (13) de manière à former une couche de renforcement (16) tout en mettant en rotation le produit moulé attaché autour d'un axe.

5. Procédé selon la revendication 4,
dans lequel le procédé inclut une étape consistant à former la couche de renforcement (16) en attachant en spirale le câblé (SC) depuis un côté circonférentiel intérieur du pneumatique vers un côté circonférentiel extérieur du pneumatique, et une étape consistant à former un second talon (1b) en attachant en spirale le câblé (SC) en continuant depuis la couche de renforcement (16) vers l'élément en caoutchouc (18) tout en faisant tourner le produit moulé autour d'un axe, en succession à l'étape de formage.

6. Procédé selon la revendication 4 ou 5,
dans lequel le câblé (SC) est constitué par un câblé revêtu avec un caoutchouc non vulcanisé, et dans lequel on exécute de façon répétée une étape consistant à attacher en spirale le câblé sur la même surface, et à attacher ensuite ultérieurement le câblé (SC) sur une surface supérieure de celui-ci, dans l'étape consistant à former le second talon (1b).

7. Procédé selon l'une quelconque des revendications 4 à 6,
dans lequel une nappe de carcasse (14) dans laquelle est agencé un câblé, est agencée dans une direction en largeur à l'extérieur d'une portion proche d'une extrémité extérieure dans une direction en largeur du tambour de chacun des éléments en caoutchouc de renforcement (18),
dans lequel la paire de premiers talons (1a) et d'éléments de remplissage de talons (12) sont agencés quelque peu à l'extérieur d'une extrémité intérieure dans la direction en largeur du tambour de la nappe de carcasse (14), et dans lequel une extrémité extérieure de chacune des nappes de carcasse (14) est enroulée autour d'un côté circonférentiel extérieur du produit moulé après avoir été déformée de manière à être attachée à celui-ci.

8. Pneumatique pour roulage à plat, comprenant :
- une paire de portions de talons (1) ayant un premier talon annulaire (1a) et un élément de remplissage de talon (12) agencé dans un côté circonférentiel extérieur du pneumatique du premier talon (1a);
- des portions de parois latérales (2) s'étendant respectivement vers un côté extérieur dans une direction diamétrale du pneumatique depuis les portions de talons (1);
- une portion de roulement (3) prévue entre les portions de parois latérales (2);
- une couche de ceinture (6) prévue sur le côté circonférentiel intérieur de la portion de roulement (3) du pneumatique;
- une couche de carcasse (4) constituée par une nappe de carcasse (14) enroulée par le premier talon (1a);
- une couche de caoutchouc de renforcement (9) agencée dans la portion de paroi latérale (2); et
- une portion en projection annulaire (10) en projection vers un côté extérieur dans une direction en largeur du pneumatique depuis la portion de talon (1), et ayant un second talon (1b),
**caractérisé en ce qu'**une couche de renforcement (16), dans laquelle un câblé (BW, SC) est agencé en spirale, est prévue dans une région opposée à une bride de bordure (8a) de la portion en projection annulaire (10), et le second talon (1b) est formé par un câblé enroulé en spirale (BW, SC) qui continue depuis la couche de renforcement (16).
